# EUROPÄISCHE PATENTSCHRIFT

(11) **EP 0 383 060 B1**
(45) Veröffentlichungstag und Bekanntmachung des Hinweises auf die Patenterteilung: **08.09.1993**
(21) Anmeldenummer: 90101344.1
(22) Anmeldetag: 24.01.1990
(51) Int. Cl.: B23K 11/30, B23K 35/00

(54) **Elektrode zum Widerstandsschweissen von oberflächenveredelten Stahlblechen und Verfahren zu deren Herstellung**
Electrode for the resistance welding of coated steel sheets, and method for its production
Electrode pour soudage par résistance de tôles d'acier à surfaces modifiées par traitement et procédé pour sa fabrication

(30) Priorität: 13.02.1989 DE 3904213
(43) Veröffentlichungstag der Anmeldung: 22.08.1990
(73) Patentinhaber: Krupp Hoesch Stahl AG, 44120 Dortmund (DE); METALLWERK PLANSEE GESELLSCHAFT M.B.H., 6600 Reutte, Tirol (AT)
(72) Erfinder: Bersch, Bernhard, Dr., D-4600 Dortmund 12 (DE); Fuchs, Axel, Dr., D-4600 Dortmund 50 (DE); Eck, Ralf, Dr., A-6600 Reutte/Tirol (AT)

(56) Entgegenhaltungen:
- DE-A- 2 804 816
- DE-C- 1 914 106
- GB-A- 8 543
- GB-A- 1 252 062

## Beschreibung

Der zunehmende Anteil von Korrosionsmedien verschiedener Art, insbesondere in Zonen mit Industrieatmosphäre, hat in verstärktem Maße die Entwicklung von Oberflächenveredelungsverfahren bei Stahlblechen einsetzen lassen, um dem Korrosionsangriff Einhalt zu gebieten. In der breiten Skala dieser Verfahren nimmt das verzinkte Feinblech eine Sonderstellung ein. Der Anteil der Legierungsmetalle spielt dabei für die spätere Verarbeitung eine ganz entscheidende Rolle.

Verbunden mit dem ständig steigenden Einsatz von verzinktem Stahlblech tritt die Frage in den Vordergrund, wie dieser Werkstoff mit den bekannten wirtschaftlichen Fertigungsverfahren der Verbindungstechnik verarbeitet werden kann. Durch den speziellen Aufbau der Zinkschicht, z. B. bei kontinuierlich arbeitenden Verzinkungsverfahren, treten beim Umformen keine Schwierigkeiten auf. Anders jedoch beim Schweißen; unter den hauptsächlich angewandten Schweißverfahren in der Stahlblechverarbeitung wie Punktschweißen, Buckelschweißen und Rollnahtschweißen bereitet das Punktschweißen die meisten Schwierigkeiten, da die Elektrodenstandmenge, vor allem unter Berücksichtigung der wirtschaftlichen Gesichtspunkte einer automatischen Fertigung, als zu gering bezeichnet werden muß.

Als Elektrodenstandmenge gilt hierbei die Anzahl von Schweißungen ausreichender Güte und Qualität, die mit einer Elektrode ohne Nacharbeit der Arbeits- oder Kontaktfläche erzielt werden kann. Die Güte einer Punktschweißverbindung kann durch mehrere Prüfmethoden ermittelt werden, wobei die vier wichtigsten herausgegriffen werden sollen:
- freier Scherzugversuch
- Torsionsversuch
- Ausknöpfprobe
- Gefügeuntersuchung im metallografischen Schliff

Umfangreiche Untersuchungen hatten daher zum Inhalt, sowohl auf den Werkstoff abgestimmte Schweißpläne als auch Möglichkeiten einer Elektrodenstandmengenerhöhung aufzuzeigen bzw. die Ursachen der geringen Elektrodenstandmenge beim Punktschweißen verzinkter Bleche zu klären.

Die geringe Elektrodenstandmenge liegt in der Legierungsneigung des Zinks zum Kupfer der Elektrode. Durch den Aufbau einer Legierungsschicht auf der Elektrodenarbeitsfläche wird der elektrische Widerstand im Stromkreis der Punktschweißung verändert. Der Kontaktwiderstand zwischen Elektrode und Stahlblech wird vergrößert. Hierdurch kommt es zu einer größeren Wärmeentstehung in der Schweißstelle, was wiederum das Anlegieren der Elektrode beschleunigt. Die Schweißpunktgüte nimmt mit zunehmender Punktanzahl schnell ab. Es ist deshalb ein Elektrodenwerkstoff zu verwenden, der keine Legierungsbildung mit Zink erlaubt. Dabei bietet sich Wolfram als hochschmelzendes Metall als Ersatz in einer Kupferelektrode an.

Man hat die Lösung dieses Problems in Verbundelektroden, wie sie aus der DE-A1-15 65 318 bekannt sind, in der Art gesucht, daß verschiedene Elemente in einer Elektrode nebeneinander eingesetzt wurden.

Auch der DE-A1- 25 54 990 und der DE-C-19 14 106 liegt die Aufgabe zugrunde, eine Elektrode mit hoher Standzeit zu schaffen, was durch den Einsatz eines warmfesten Materials als Stift in die Kontaktfläche erreicht wurde.

Mit der DE-C-625 201 ist ebenfalls eine Elektrode bekannt geworden, deren Einsätze aus einem schwerer schmelzenden Metall bestehen, wobei das schwerer schmelzende Metall vorzugsweise als Blechschicht in das leichter schmelzende Metall eingebettet wird und deren Faserrichtung ungefähr parallel zur Richtung des elektrischen Stromes liegt.

Die DE-B-22 03 776 offenbart Elektroden, deren Kontaktflächen aus Legierungen bestehen, deren Metallkristalle gerichtete ausgeschiedene langgestreckte Phasen haben.

Durch die US-A-3, 665, 145 sind Elektroden, die an der Spitze mit Kappen und einem Plättchen aus einem hochschmelzenden Material versehen sind, bekannt geworden.

Die GB-A-8543 zeigt eine Elektrode aus Kupfer mit einem Plättchen aus einem hochschmelzenden Metall an der Arbeitsfläche, das von gesinterten oder geschmiedeten Stäben abgeschnitten werden muß und keine gezielte Kornorientierung aufweist, wodurch die Standzeit sehr unterschiedlich und daher nicht reproduzierbar ist.

Eine umfassende Untersuchung der Standzeiten mit Molybdän- und Wolfram-Elektroden beim Punktschweißen verzinkter Feinbleche haben Prof. Dr. Ing. Matting und Krüger an der Technischen Hochschule in Hannover durchgeführt. Die Ergebnisse dieser Untersuchung sind in der Fachzeitschrift "Bänder Bleche Rohre 8 (1967) Nr. 5 und 6" abgedruckt.

Obwohl die Untersuchungen sehr breit angelegt waren, war das Ergebnis nicht befriedigend. Bei sehr dicken und langen Elektrodeneinsätzen aus hochschmelzenden Metallen ist das Problem der unzureichenden Wärmeabfuhr durch die Wasserkühlung gegeben. Außerdem ist z. B. ein dicker Wolframeinsatz in der Elektrode ein sehr schlechter Leiter für den elektrischen Strom und ungünstig für die Wärmeabfuhr. Es überwogen deshalb bei den praktischen Einsätzen die Mißerfolge. Eine Reproduzierbarkeit bei gleichbleibender Schweißpunktgüte war nicht gegeben.

So wurde z. B. festgestellt, daß die Nichtreproduzierbarkeit thermische Ursache hatte. Es wurden Risse in den Wolframeinsätzen festgestellt, ferner war ein Aufrauhen der Arbeitsflächen sichtbar. Kleine Wolframpartikel hatten sich gleichmäßig über die ganze Fläche herausgelöst. Betrachtet man die Risse bei bestimmten Vergrößerungen, so wird eine mittelgraue Substanz sichtbar. Es lag deshalb der Rückschluß nahe, daß das Zink des Stahlblechs während des Schweißens in die Risse hineingepreßt wird und aufgrund der starken Erwärmung entlang der Korngrenzen ins Wolfram hineindiffundiert. Dieser Umstand hat eine gewisse Sprengwirkung, die das Wolfram ausbrechen läßt. Gleichzeitig erhöht sich aber auch der elektrische Widerstand der Elektrode, was eine Erhöhung bzw. Nachregelung des Schweißstromes zur Folge hat. Die Erhöhung des Schweißstromes bringt aber wieder eine Steigerung der Wärme in der Elektrode mit sich. Das eindiffundierte Zink bildet eine isolierende Schicht und verhindert auch den Wärmetransport ins gekühlte Kupfer. Dieser Wärmestau fördert aber gleichzeitig die Legierungsbildung.

Diese vorbeschriebenen Versuche sind mit Elektroden durchgeführt worden, die Einsätze aus Wolfram oder Molybdän hatten. Diese Einsätze waren von herkömmlichen Stangenmaterial abgestrennt worden und relativ lang, da sie in dem Elektrodenschaft sicher befestigt werden mußten. Gleichzeitig aber war die Kornorientierung in Stromflußrichtung, d. h., parallel zur Elektrodenlängsrichtung, ausgebildet. Die Standmengen der so bestückten Elektroden waren sehr unterschiedlich. Eine definierte Reproduzierbarkeit ist bei dem Stand der Technik nicht gegeben.

Die Forderungen an einen Elektrodenwerkstoff für das Punktschweißen verzinkter Bleche lassen sich wie folgt präzisieren:
- geringe oder keine Legierungsbildung mit Zink
- hohe Warmhärte
- geringer elektrischer Widerstand und ausreichende Wärmeleitfähigkeit

Der Erfindung liegt daher die Aufgabe zugrunde, eine Elektrode für das elektrische Widerstandsschweißen zu finden, deren Standmenge reproduzierbar ist, wesentlich höher liegt als bei bekannten Elektroden, ohne aufwendige Regulierung des Schweißstromes und über ihre Lebensdauer eine gleichbleibende, qualitativ hochwertige Punktschweißverbindung liefert, ohne eine Lötrissigkeit in der Punktschweißverbindung hervorzurufen. Diese Forderung wird besonders durch den stark steigenden Verbrauch verzinkter Stahlbleche der Automobilindustrie aufgestellt, die in verstärktem Maße oberflächengeschützte Bleche einsetzt und in zunehmendem Maße der Produkthaftung Rechnung tragen muß.

Die Aufgabe wird dadurch gelöst, daß eine Elektrode oder Elektrodenkappe mit einer guten elektrischen Leitfähigkeit an der Arbeitsfläche mit einem dünnen Plättchen eines hochschmelzenden Metalls, vorzugsweise Wolfram oder einer Legierung aus verschiedenen geeigneten Metallen, unlösbar verbunden wird, dessen Gefügekorn sehr flachgestreckt ist und eine der Kornorientierung aufweist, die quer zur Längsachse der Elektrode verläuft. Dadurch, daß an der unmittelbaren Kontaktstelle zum schweißenden Material kein Kupfer vorhanden ist, besteht nicht mehr die Gefahr der Lötrissigkeit. Bei Kupferelektroden ist dieser Bereich der Lötrissigkeit schnell erreicht, weil durch eine Erhöhung des Schweißstromes auch die thermische Belastung steigt und damit der Schmelzpunkt des Kupfers schnell überschritten wird. Darüber hinaus dringt das geschmolzene Zink des Stahlblechüberzuges in die Elektrode ein und verunreinigt damit das Kupfer.

Besonders im Hinblick auf die im steigenden Maße einsetzende Produkthaftung kann durch den erfindungsgemäßen Gegenstand die Lötrissigkeit vermieden und somit eine qualitativ hochwertige Schweißverbindung hergestellt werden.

Die Erfindung soll anhand der schematischen Zeichnungen, die verschiedene mögliche Ausführungsbeispiele zeigen, erläutert werden.

Es zeigen:

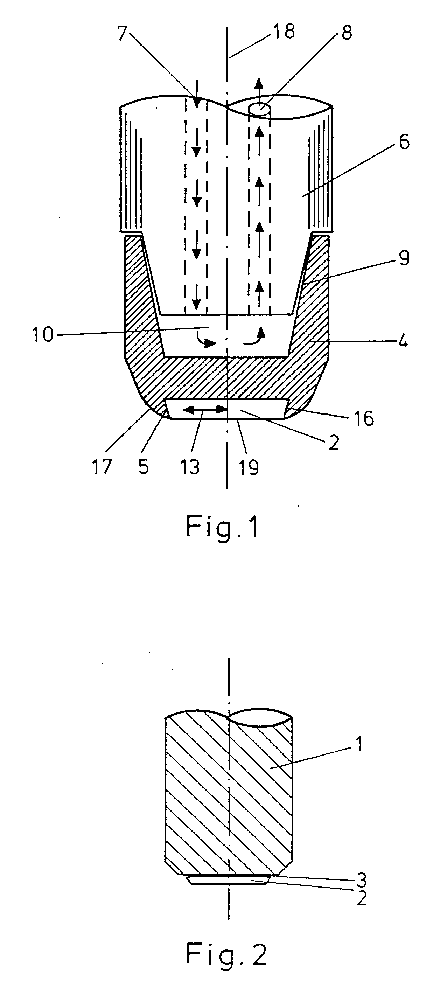

- Fig. 1: Elektrodenschaft mit aufgesteckter Elektrodenkappe,
- Fig. 2: Schaftelektrode mit Kontaktplatte,

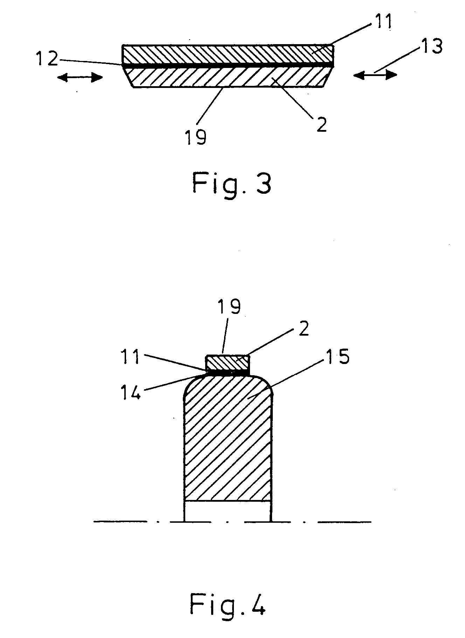

- Fig. 3: Verbundmaterial aus Cu und hochschmelzendem Metall,
- Fig. 4: Rollenelektrode mit Verbundmaterial,

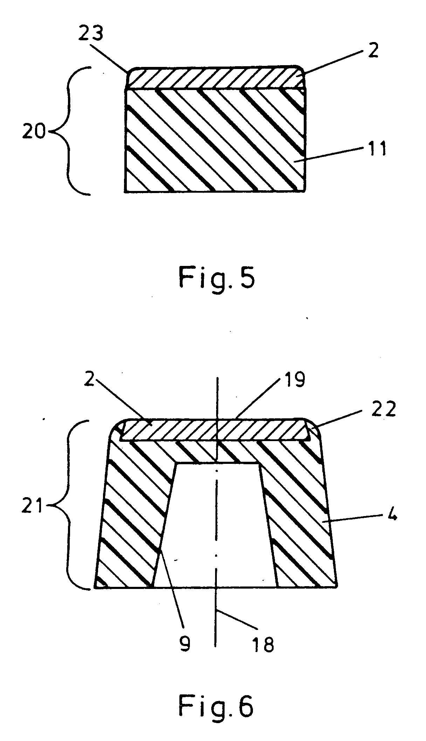

- Fig. 5: Ronde aus Verbundmaterial,
- Fig. 6: geschlagene Elektrodenkappe.

Das auf der Arbeitsfläche unlösbar befestigte Plättchen 2 hat eine Dicke, die unter 4 mm liegt. Je dünner das Plättchen 2 ist, um so besser ist die Kühlung der Elektrode. Ebenfalls ist der elektrische Widerstand bei extrem dünnen Plättchen 2 geringer. Grenzen bei der Stärke der Plättchen 2 sind durch die mechanische Festigkeit angezeigt. Durch die bessere Kühlung bei dünnen Plättchen 2 verringert sich die Klebneigung der Elektroden auf den zu verschweißenden oberflächenveredelten Stahlblechen.

Das Plättchen 2 ist aus einem reinen hochschmelzenden Metall, vorzugsweise Wolfram oder Molybdän. Da diese reinen Metalle jedoch sehr spröde sind, können sie auch mit Zusätzen anderer hochschmelzender Metalle wie z. B. Rhenium legiert werden. Selbst Chrom kann als Bindemittel mit einem geringen Anteil als Legierungselement verwendet werden. Aber nicht nur die reinen Elemente, auch deren Oxide können Verwendung finden.

Bei den Legierungen können alle geeigneten hochschmelzenden Metall miteinander legiert werden. Diese Legierungen können zusätzlich mit 0,1 - 15 % HF und/oder 0,1 - 15 % Zr und/oder 0,15 - 15 % Ti und 0,01 - 3 % C verändert werden. Auch reine Oxidzusätze sind durchaus möglich.

Ebenfalls kann Molybdän von Aluminium, Kalium und Silizium dotiert oder oxiddispergiert werden. Darüber hinaus können Oxidzusätze von 0,05 - 25 % in Form von Oxidkeramik mit einem Schmelzpunkt des Oxides, der über 1.500 °C liegt, zugesetzt werden. Geeignete Oxidkeramiken wären z. B. Mo 15 Zro₂, Mo 15 CeO₂ und Mo 15 La₂O₃.

Bei allen Legierungen ist darauf zu achten, daß die elektrische Leitfähigkeit ausreichend groß ist.

Damit zwischen das Korngefüge keine schädlichen Oberflächenmaterialien des Stahlbleches eindiffundieren können, muß die Kornorientierung 13 quer zur Elektrodenachse 18 liegen. Nur so ist es sichergestellt, daß die physikalischen Eigenschaften des Plättchens 2 erhalten bleiben. Um dünne Plättchen 2 zu erhalten, wird das Ausgangsmaterial ausgewalzt. Damit erhält man automatisch die richtige Kornorientierung 13. Gleichzeitig wird das Gefügekorn auch langgestreckt. Das große flache gestreckte Korn ist für diesen Anwendungsfall besser als ein kleines flachgestrecktes Korn. Mit dem großen flachen Korn ergeben sich zwangsläufig weniger Korngrenzen, die senkrecht zur Oberfläche stehen, auch wird die Neigung zu Kantenausbrüchen vermieden.

Je nach Anwendungsfall gibt es verschiedene Verfahren, die Plättchen 2 mit dem Elektrodenschaft 1 oder der Elektrodenkappe zu verbinden. Als wirtschaftliche Verfahren sind Hartlöten, Reibschweißen, Sprengplattieren, Verpressen, Schlagen oder Hintergießen zu nennen.

Beim Hartlöten wird das ausgestanzte Plättchen 2, welches eine gewisse Duktilität hat, mittels eines geeigneten Lotes zu einer unlösbaren Verbindung 3 mit dem Elektrodenschaft 1 verbunden. Je dünner die Plättchen 2 sind, um so schwieriger ist auch die Befestigung. Die Plättchen 2, die an ihrem Umfang einen kegelstumpfförmigen Konus 5 aufweisen, lassen sich sehr gut, z. B. bei Elektrodenkappen, gleich bei der Herstellung mitvergießen. Dadurch, daß der kleinere Durchmesser des Plättchens 2 die Arbeitsfläche 19 darstellt, kann das Plättchen 2 nicht herausfallen, es wird sicher von dem Elektrodenmaterial 16 ummantelt.

Eine weitere wirtschaftliche Befestigungsart wäre durch Pressen oder Schlagen zu erreichen. Da das Elektrodenmaterial der Kappen 4 relativ weich ist, kann in einem Fertigungsvorgang das Plättchen 2 gleich mit eingesetzt werden und die Kappe 4 erhält auch gleichzeitig eine umlaufende Rundung 17. Durch das Schlagen werden alle Hohlräume um das Plättchen 2 verfüllt. Das Kupfer fließt sozusagen. Da die Elektrodenkappen 4 einen Wegwerfartikel darstellen und z. B. in der Automobilindustrie pro Schicht gewechselt werden, stellt die vorbeschriebene Befestigungsmöglichkeit eine kostengünstige Alternative zu anderen Elektroden dar. Das Nacharbeiten der Kappen ist nicht wirtschaftlich.

Ein weiterer Vorteil der Kappe 4 liegt darin, daß als Ausgangsmaterial Elektrolytkupfer genommen werden kann, welches sowohl eine bessere elektrische Leitfähigkeit als auch Wärmeleitfähigkeit als andere Legierungen oder Metall hat.

Es ist aber auch möglich, aus einem hochschmelzendem Metall und Elektrolytkupfer 11 ein Verbundplättchen herzustellen. Hierfür wird z. B. Wolfram als Band auf die gewünschte Stärke ausgewalzt. Hierdurch erhält das Gefüge auch gleich die langgestreckte Kornorientierung. Auf eine Seite des Bandes kann entweder durch Gießen oder auf galvanischem Wege eine dünne Schicht Elektrolytkupfer 11 aufgebracht werden. Diese Schicht bildet eine unlösbare Verbindung 12 mit dem Wolfram. Mit Hilfe einer Stanze werden nun aus dem Verbundmaterial runde Scheiben in Größe der Arbeitsfläche 19 ausgestanzt. Aufgrund der dünnen Elektrolytkupferschicht 11 lassen sich die Scheiben z. B. durch Induktionslöten problemlos und wirtschaftlich entweder auf Kappen 4 oder Elektrodenschäfte 1 hart auflöten.

Eine sehr wirtschaftliche Fertigungsmethode ist das Schlagen von Elektrodenkappen 4. Hierfür wird ein Verbundmaterial aus hochschmelzendem Metall und Kupfer zum Einsatz gebracht.

In diesem vorliegenden Anwendungsfall muß aber die Elektrolytkupferschicht 1 wesentlich dicker sein als das Plättchen 2. Aus dem Flachmaterial werden ebenfalls Ronden ausgestanzt. Durch das Stanzen erhält das hochschmelzende Material eine leichte Verrundung 23. In einer nicht näher beschriebenen Vorrichtung werden die Ronden aus Verbundmaterial weiterverarbeitet. Dabei wird das weiche Elektrolytkupfer 11 durch Schlagen in die gewünschte Form einer Elektrodenkappe 4 verformt. Aufgrund der Werkzeuggeometrie wird gleichzeitig erreicht, daß das Kupfer um die Verrundung 23 des Plättchens 2 getrieben wird. Es entsteht dadurch eine Verfüllung 22, die dem Plättchen 2 einen noch besseren Halt gibt. Damit die Arbeitsfläche 19 frei von Kupfer ist, muß unter Umständen eine geringe Nacharbeit der Elektrodenkappe 4 vorgenommen werden.

Als Ausgangsmaterial für die Elektrodenkappen 4 kann auch ein Elektrolytkupferkern 11 verwendet werden. Durch Reibschweißen, Sprengplattieren oder Induktionslöten wird ein Plättchen 2 befestigt und anschließend, wie bereits vorbeschrieben, die Elektrodenkappe 4 geschlagen.

Mit all diesen Verfahren wird eine sichere und richtige Plazierung des Plättchens 2 erreicht.

Mit dem gleichen Verbundmaterial lassen sich auch Ringe für eine Rollenelektrode 15 herstellen. Auch diese Ringe werden auf einer Rollenelektrode 15 durch Induktionslöten 14 unlösbar befestigt.

Die verwendeten dünnen Plättchen 2 erlauben es, den Aufbau der Elektrode zu verändern und ermöglichen damit eine wesentlich bessere Kühlung. Das unmittelbar hinter dem Plättchen 2 anschließende Kupfer der Elektrodenkappen 4 hat eine bessere Wärmeableitung als z. B. Wolfram. So sitzt z. B. die Elektrodenkappe 4 auf einem Befestigungskonus 9 des Elektrodenhalters 6. Das Kühlwasser strömt durch einen Kanal 7 in den Elektrodenhalter 6. Zwischen dem Elektrodenhalter 6 und der Elektrodenkappe 4 befindet sich ein Hohlraum 10, in den das Kühlwasser einströmt. Die an der Arbeitsfläche 19 entstehende Wärme wird aufgrund des Temperaturgefälles zum Hohlraum 10 der Elektrodenkappe 4 gezogen. Das sich erwärmende Kühlwasser wird über den Kanal 8 wieder abgeführt. Somit kann sich aufgrund des großen Kupferanteiles das System nicht aufheizen. Die Wärme wird direkt vom Entstehungsort aus abgeleitet. Diese Wärmeableitung ist um so besser, je dünner das Plättchen 2 ist.

Gleichzeitig wird aber mit der besseren Wärmeabführung die Klebneigung der Arbeitsflächen 19 herabgesetzt. Sollte trotzdem eine Elektrode zum Kleben neigen, so kann auch dabei das dünne Plättchen 2 nicht aus seiner Verankerung herausgerissen werden, weil die Verbindungsart dadurch nicht zerstört wird.

Gestützt auf umfangreiche Versuchsreihen bietet der Erfindungsgegenstand eine bisher nicht erreichte Reproduzierbarkeit der Schweißgüte von Punktschweißverbindungen. Bei gleichbleibender Qualität können z. B. an vollautomatischen Schweißstraßen ausreichend Schweißstellen hergestellt werden, ohne daß die Elektrodenkappen gewechselt werden müssen. Die Schweißsicherheit steigt mit dem Erfindungsgegenstand.

## Patentansprüche

1. Elektrode aus Kupfer oder einer elektrisch gut leitenden Kupferlegierung mit gleichzeitiger hoher mechanischer Festigkeit für die elektrische Widerstandsschweißung von Blechen, insbesondere von oberflächenveredelten Stahlblechen, die an der Arbeitsfläche ein Plättchen aus einem hochschmelzenden Metall aufweist, das dünner als 4 mm und mit der Arbeitsfläche unlösbar verbunden ist, dadurch gekennzeichnet, daß das Plättchen (2) ein flachgestrecktes Gefügekorn (13) und gleichzeitige Kornorientierung, die quer zur Längsachse (18) der Elektrode verläuft, aufweist.

2. Elektrode nach Anspruch 1, dadurch gekennzeichnet, daß als hochschmelzendes Metall reines Molybdän oder reines Wolfram oder ein anderes Element der gleichen Gruppe verwendet wird.

3. Elektrode nach Anspruch 1 und 2, dadurch gekennzeichnet, daß das Plättchen (2) aus einer Legierung von Wolfram und/oder Molybdän und Rhenium oder anderen Elementen besteht.

4. Elektrode nach Anspruch 1, dadurch gekennzeichnet, daß als Metall eine Legierung aus Molybdän und/oder Wolfram und/oder Chrom mit ca. 0,1 - 15 % HF und/oder 0,1 - 15 % Zr und/oder 0,15 - 15 % Ti und 0,01 - 3 % C verwendet wird.

5. Elektrode nach Anspruch 2, dadurch gekennzeichnet, daß Oxidzusätze zugesetzt sind.

6. Elektrode nach Anspruch 1, dadurch gekennzeichnet, daß als hochschmelzendes Metall Molybdän und/oder Wolfram und/oder Chrom mit Stapelgefüge Al, K, Si und Elementen der Seltenen Erden dotiert oder oxiddispergiert verwendet wird.

7. Elektrode nach den Ansprüchen 1 bis 6, dadurch gekennzeichnet, daß das Plättchen (2) eine kegelstumpfförmige Form (5) hat und mit seinem größeren Durchmesser an dem Kupferelektrodenschaft unlösbar befestigt ist.

8. Elektrode nach den Ansprüchen 1 bis 6, dadurch gekennzeichnet, daß das Plättchen (2) an dem Elektrodenschaft (1) oder der Elektrodenkappe (4) durch Hartlöten, Reibschweißen, Hintergießen, Verpressen, Schlagen oder Sprengplattieren unlösbar befestigt ist.

9. Elektrode nach den Ansprüchen 1 bis 8, dadurch gekennzeichnet, daß das hochschmelzende Kontaktmetall als Bandmaterial ausgewalzt und mit einer dünnen Schicht Elektrolytkupfer (11) beschichtet ist und als Verbundplättchen ausgestanzt und mit dem Elektrodenschaft unlösbar verbunden ist.

10. Elektrode nach einem oder mehreren der Ansprüche 1 bis 9, dadurch gekennzeichnet, daß die Elektrode mit dem Plättchen (2) aus einer an der Spitze eines Elektrodenhalters (6) auswechselbar angeordneten Elektrodenkappe (4) aus reinem Kupfer oder einer Legierung aus Kupfer, Chrom und Zirkon besteht.

11. Elektrode nach den Ansprüchen 1 und 9, dadurch gekennzeichnet, daß die Kupferschicht (11) des Verbundmaterials wesentlich dicker als das hochschmelzende Kontaktmaterial ist.

12. Elektrode nach Anspruch 10, dadurch gekennzeichnet, daß aus dem Verbundmaterial Ronden (20) ausgestanzt, aus denen Elektrodenkappen (4) mit einem Befestigungskonus (9) in einer Form geschlagen sind, wobei durch das Schlagen das Kupfer um die Randzonen der kegelstumpfförmigen Form (5) des Plättchens (2) gepreßt ist (22).

13. Rollenelektrode (15) aus Kupfer oder einer elektrisch gut leitenden Kupferlegierung mit gleichzeitiger hoher mechanischer Festigkeit für die Widerstandsschweißung von Blechen, insbesondere von oberflächenveredelten Stahlblechen, die an der Arbeitsfläche ein Plättchen aus einem hochschmelzenden Metall aufweist, das dünner als 4 mm und mit der Arbeitsfläche unlösbar verbunden ist, und als ein um die Rollenelektrode (15) umlaufendes Band ausgebildet ist, dadurch gekennzeichnet, daß das Plättchen (2) ein flachgestrecktes Gefügekorn und gleichzeitige Kornorientierung (13), die parallel zum Umfang der Rollenelektrode (15) verläuft, aufweist.

## Claims

1. Electrode made from copper or a satisfactorily electrically conductive copper alloy having at the same time high mechanical strength, for the purpose of the electric resistance-welding of sheets, in particular for surface-finished steel plates, which comprise on the working surface a plate which is made from refractory metal and the plate is thinner than 4mm and permanently connected to the working surface, characterised in that the plate (2) comprises a flat-stretched structural grain (13) and at the same time grain orientation, which extends transverse to the longitudinal axis (18) of the electrode.

2. Electrode as in claim 1, characterised in that the refractory metal used is pure molybdenum or pure tungsten or another element from the same group.

3. Electrode as in claim 1 and 2, characterised in that the small plate (2) comprises an alloy of tungsten and/or molybdenum and rhenium or other elements.

4. Electrode as in claim 1, characterised in that the metal used is an alloy of molybdenum and/or tungsten and/or chromium having approx. 0.1 - 15% HF and/or 0.1 - 15% Zr and/or 0.15 - 15% Ti and 0.01 - 3% C.

5. Electrode as in claim 2, characterised in that oxide additions may be added.

6. Electrode as in claim 1, characterised in that the refractory metal used is molybdenum and/or tungsten and/or chromium doped or oxide-dispersed with stack structures of Al, K, Si and elements of the rare earths.

7. Electrode as in claims 1 to 6, characterised in that the plate (2) has a frusto-conical form (5) and is undetachably secured by its larger diameter on the copper electrode shank.

8. Electrode as in claims 1 to 6, characterised in that the plate (2) may be undetachably secured on the electrode shank (1) or electrode cap (4) by hard-soldering, friction-welding, backing, pressing, beating or explosion-plating.

9. Electrode as in claims 1 to 8, characterised in that the refractory contact metal is rolled out as strip material and is coated with a thin layer of electrolytic copper (11) and is punched out as a composite plate and undetachably connected to the electrode shank.

10. Electrode according to one or several of claims 1 to 9, characterised in that the electrode having the small plate (2) comprises an electrode cap (4) which is exchangeably disposed on the tip of an electrode holder (6) and the electrode cap (4) is made from pure copper or an alloy of copper, chrome and zircon.

11. Electrode as in claims 1 and 9, characterised in that the copper layer (11) of the composite material is substantially thicker than the refractory contact material.

12. Electrode as in claim 10, characterised in that rounds (20) are punched out of the composite material, from which electrode caps (4) having an attachment cone (9) are beaten in a mould, wherein by virtue of the beating the copper is pressed about the edge zones of the frusto-conical shape (5) of the plate (2). (22).

13. Roller electrode (15) made from copper or a satisfactorily electrically conductive copper alloy having at the same time high mechanical strength for the purpose of resistance-welding sheets, in particular surface-finished steel plates, which comprise on the working surface a plate made from a refractory metal which is thinner than 4 mm and is permanently connected to the working surface and which is formed as a strip embracing the roller electrode (15), characterised in that the small plate (2) comprises a flat-stretched structural grain and at the same time grain orientation, which extends parallel to the periphery of the roller electrode (15).

## Revendications

1. Electrode de cuivre ou d'un alliage de cuivre bon conducteur de l'électricité, possédant simultanément une résistance mécanique élevée, pour le soudage par résistance électrique de tôles, en particulier de tôles d'acier traitées en surface, qui présente sur la surface de travail une plaquette en un métal à haut point de fusion, d'une épaisseur inférieure à 4 mm, et qui est liée de manière permanente à la surface de travail, caractérisée en ce que la plaquette (2) présente à la fois un grain structurel étiré (13) et une orientation grainulaire perpendiculaire à l'axe longitudinal (18) de l'électrode.

2. Electrode selon la revendication 1, caractérisée en ce que l'on utilise comme métal à haut point de fusion du molybdène pur, ou du tungstène pur ou encore un autre élément du même groupe.

3. Electrode selon les revendications 1 et 2, caractérisée en ce que la plaquette (2) est constituée d'un alliage de tungstène et/ou de molybdène et de rhénium ou d'autres éléments.

4. Electrode selon la revendication 1, caractérisée en ce que l'on utilise comme métal un alliage de molybdène et/ou de tungstène et/ou de chrome avec environ 0,1 - 15 % de HF et/ou 0,1 - 15 % de Zr et/ou 0,15 - 15 % de Ti et 0,01 - 3 % de C.

5. Electrode selon la revendication 2, caractérisée en ce que des oxydes sont ajoutés.

6. Electrode selon la revendication 1, caractérisée en ce que l'on utilise comme métal à haut point du fusion du molybdène et/ou du tungstène et/ou du chrome dopés ou à dispersion d'oxyde de Al, K, Si et d'éléments des terres rares à structure d'empilement.

7. Electrode selon les revendications 1 à 6, caractérisée en ce que la plaquette (2) a une forme de tronc de cône (5) et est fixée de manière permanente, par son plus grand diamètre, au fût de l'électrode de cuivre.

8. Electrode selon les revendications 1 à 6, caractérisée en ce que la plaquette (2) est fixée de manière permanente au fût (1) de l'électrode ou à la coiffe (4) de l'électrode par brasage fort, soudage par friction, doublage, pressage, martelage ou plaquage par explosion.

9. Electrode selon les revendications 1 à 8, caractérisée en ce que le métal de contact à haut point de fusion est laminé sous la forme d'un feuillard et est revêtu d'une mince couche de cuivre électrolytique (11), et est matricé sous la forme d'une plaquette composite, et monté de manière permanente sur le fût de l'électrode.

10. Electrode selon une ou plusieurs des revendications 1 à 9, caractérisée en ce que l'électrode avec la plaquette (2) est constituée d'une coiffe d'électrode (4) en cuivre pur ou en un alliage de cuivre, de chrome et de zircon, installée de manière interchangeable à l'extrémité d'un support d'électrode (6).

11. Electrode selon les revendications 1 et 9, caractérisée en ce que la couche de cuivre (11) du matériau composite est sensiblement plus épaisse que la matière de contact à haut point de fusion.

12. Electrode selon la revendication 10, caractérisée en ce que l'on matrice dans le matériau composite des flancs circulaires (20) à partir desquels des coiffes d'électrode (4) dotées d'un cône de fixation (9) sont martelées dans un gabarit, le martelage ayant pour effet de presser (22) le cuivre autour des bords de la forme tronconique (5) de la plaquette (2).

13. Electrode à rouleau (15) en cuivre ou en alliage de cuivre bon conducteur de l'électricité, possédant simultanément une résistance mécanique élevée, pour le soudage par résistance de tôles, en particulier de tôles d'acier traitées en surface, qui présente sur la surface de travail une plaquette en un métal à haut point de fusion qui est d'une épaisseur inférieure à 4 mm et est réalisée sous forme d'une bande entourant l'électrode à rouleau (15), caractérisée en ce que la plaquette (2) présente à la fois un grain structurel étiré (13) et une orientation granulaire parallèle au contour de l'électrode à rouleau (15).
